# EUROPÄISCHE PATENTSCHRIFT

(11) **EP 1 803 968 B1**
(45) Veröffentlichungstag und Bekanntmachung des Hinweises auf die Patenterteilung: **11.06.2014**
(21) Anmeldenummer: 06008725.1
(22) Anmeldetag: 27.04.2006
(51) Int. Cl.: F16F 15/027

(54) **Druckgaszufuhrsystem für Gasfedern**
Supply system for pressurized gas for gas springs
Système d'alimentation en gaz pressurisé pour des ressorts à gaz

(30) Priorität: 30.12.2005 EP 05028715
(43) Veröffentlichungstag der Anmeldung: 04.07.2007
(73) Patentinhaber: Integrated Dynamics Engineering GmbH, 65479 Raunheim (DE)
(72) Erfinder: Heiland, Peter, 65379 Raunheim (DE)
(74) Vertreter: Blumbach Zinngrebe

(56) Entgegenhaltungen:
- WO-A1-99/05573
- DE-A1- 4 106 474
- US-A- 6 019 121

## Beschreibung

Die Erfindung bezieht sich auf ein Druckgaszufuhrsystem für Gasfedern, insbesondere eines Schwingungsisolationssystems und auf ein Verfahren zur Feinregulierung eines pulsationsbehafteten Gasvolumenstroms an eine Gasfeder. Ein solches Schwingungsisolationssystem umfasst eine Gasfeder, eine Gasquelle, eine Gasstromregeleinrichtung und eine Zufuhrleitung zu der Gasfeder.

Ein Schwingungsisolationssystem unter Verwendung einer Gasfeder ist beispielsweise aus der EP-A-0 927 380 B1 = WO9905573 = US 6 226 075 B1 bekannt. Die Schwingungsisolation einer Masse, z. B. eines Lithographiegerätes, ist um so besser, je weniger steif die Gasfeder zur Lagerung der abzufedernden Masse ist. Zur Reduzierung der Steifigkeit des Gaslagers nimmt man einen Leckstrom an der Gasfederlagerung in Kauf. Weiterhin besteht das Bestreben, die Baugröße der Gasfeder nicht ein gewisses Maß überschreiten zu lassen, was aber, wenn es sich um Tonnen schwere, abzufedernde Geräte handelt, zu erhöhtem benötigtem Druck in der Gasfeder führt. Ein solcher erhöhter Druck führt nicht nur zu einer Erhöhung des Leckstromes, sondern auch zu Eigenrauschen der Gasfeder, verursacht durch Wirbel im Leckgasstrom. Eine weitere Quelle von Druckluftschwankungen liegt in der Verwendung von Pumpen zur Druckgaserzeugung.

Der Erfindung liegt die Aufgabe zugrunde, ein Druckgaszufuhrsystem für Gasfedern, insbesondere eines Schwingungsisolationssystems zu schaffen, bei dem sich gewisse Druckschwankungen selbsttätig ausregeln.

Die gestellte Aufgabe wird aufgrund der Merkmale des Anspruchs 1 bzw. 6 gelöst und durch die weiteren Merkmale der abhängigen Ansprüche ausgestaltet und weiter entwickelt.

Im Einzelnen liegen die Gasquelle, die Gasstromregeleinrichtung und die Gasfeder in Reihe. Als Gasstromregeleinrichtung wird ein Ventil verwendet, das ein stößelartiges Ventilelement umfasst. Dieses stößelartige Ventilelement weist noch innerhalb der Zuflusskammer des Ventils eine kegelartige Verdickung auf, die mit Ventilsitz-Wandteilen des Ventilgehäuses zusammen arbeitet, um eine Drossel zu bilden, welche die Größe des gesteuerten oder geregelten Gashauptstroms in die Ventilkammer und die Abflusskammer des Ventils bestimmt. Die Verdickung bildet gleichzeitig einen Kolben, an dem der Differenzdruck zwischen Zuflusskammer und Abflusskammer des Ventils anliegt. Das Ventilelement ist in Durchflussrichtung des Gashauptstroms federnd gelagert. Bei einer auftretenden Druckerhöhung in der Zuflusskammer nimmt der Differenzdruck an dem Drosselkolben zu, so dass sich das Ventilelement ein wenig schließt und die erhöhte Drosselwirkung die Druckerhöhung im Hinblick auf den Gashauptstrom kompensiert. Bei Druckabfall in der Zuflusskammer nimmt der Differenzdruck am Drosselkolben ab, und das Ventilelement öffnet dementsprechend, so dass der durchfließende Strom weiterhin in etwa konstant bleibt.

Die Gasstromregeleinrichtung in der erfindungsgemäßen Ausgestaltung hat auch einen günstigen Einfluss hinsichtlich Druckschwankungen durch Eigenrauschen der Gasfeder. Von der Gasfeder ausgehende Druckwellen, die sich durch die Zufuhrleitung bis in die Abflusskammer des Regelventils fortpflanzen, werden dort weitgehend absorbiert. Wenn nämlich der Druck in der Abflusskammer zunimmt, verringert sich das Druckgefälle an der Drossel, und der Gashauptstrom nimmt dementsprechend ab, was eine gewisse Druckminderung bedeutet. Bei einem Druckabfall in der Abflusskammer nimmt das Druckgefälle zu und damit auch der Gashauptstrom, was den verminderten Druck ausgleicht.

Ein Ausführungsbeispiel der Erfindung wird anhand der Zeichnung beschrieben. Dabei zeigt:

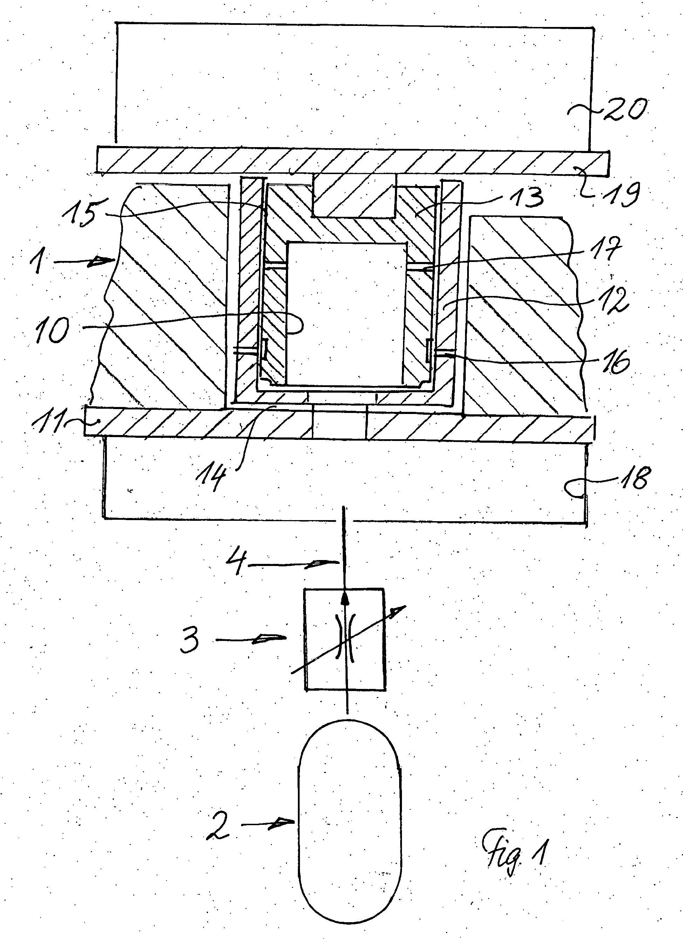

- Fig. 1: ein Schwingungsisolationssystem mit Druckgaszufuhr in schematischer Darstellung,
- Fig. 2: eine Gasstromregeleinrichtung.

Das Schwingungsisolationssystem umfasst eine Gasfeder 1, eine Gasquelle 2, eine Gasstromregeleinrichtung 3 und eine Zufuhrleitung 4 zur Verbindung der Gasquelle 2 mit der Gasfeder 1 über die Gasstromregeleinrichtung 3. Die Gasfeder 1 enthält eine Gasdruckkammer 10, die von einer Basisplatte 11, einem Führungsgehäuse 12 und einem Kolben 13 umschlossen wird. Zwischen der Basisplatte 11 und dem Führungsgehäuse 12 befindet sich ein horizontaler Spalt 14 zur Bildung eines Luftkissens als Horizontal-Luftlager. Zwischen dem Zylinder des Führungsgehäuses 12 und dem Kolben 13 erstreckt sich ein vertikaler Spalt 15, der ein vertikales Luftlager bildet. Im Führungsgehäuse 12 und dem Kolben 13 sind Bohrungen 16 und 17 vorgesehen, so dass Druckluft durch die Spalte der Gasfeder strömen kann, was zu der erwünschten geringen Steifigkeit der Gasfeder führt. An die Gasfeder 1 ist gewöhnlich noch ein Nebenluftraum 18 angeschlossen, der die Weichheit der Feder entsprechend dem eingeschlossenen Volumen erhöht. Am Kolben ist noch eine Tragplatte 19 angebracht, auf der eine Last 20 ruht, die als ein Lithographiegerät tonnenschwer sein kann. Ein solches Lithographiegerät oder anderes Untersuchungs- oder Bearbeitungsgerät muss gegen Bodenschwingungen isoliert werden, wozu drei oder mehrere der beschriebenen Gasfedern dienen. Je größer die Gesamttragfläche dieser Gasfedern ist, um so geringeren Gasdruck benötigt man für die jeweilige Lagerung der Last. Häufig ist jedoch die verfügbare Tragfläche am Gerät beschränkt, so dass man relativ höhere Gasdrücke im Bereich von 2 bis 6 bar in den Gasfedern anwenden muss. Derartig hohe Drücke führen zum Eigenrauschen der Gasfeder, wenn turbulente Strömungsverhältnisse in den Spalten zustande kommen oder wenn das zugeführte Druckgas mit Druckpulsationen überlagert ist. Die Erfindung hat damit zu tun, ein Druckgaszufuhrsystem für Gasfedern von Schwingungsisolationssystemen zu schaffen, welches das Druckgas im wesentlichen frei von Pulsationen liefert, die zur Schwingungsanregung ("Eigenrauschen") des Schwingungsisolationssystems führen könnten.

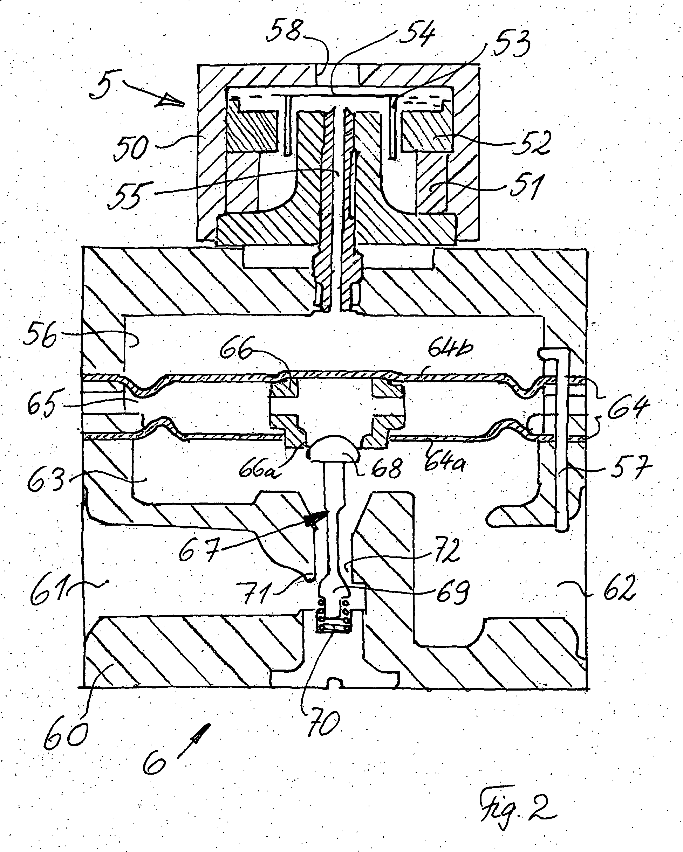

Als Druckgasquelle 2 wird gewöhnlich ein Kompressor verwendet, der jedoch die Druckluft nicht pulsationsfrei liefert. Damit der Druckgasstrom in dem benötigten Volumen und dem benötigten Druck bei der Gasfeder 1 ankommt, wird eine Gasstromregeleinrichtung 3 in Form eines Regelventils verwendet, das vorzugsweise ein Vorsteuerventil 5 und ein Hauptventil 6 umfasst (Fig. 2). Das Vorsteuerventil 5 ist im wesentlichen in einem Gehäuse 50 untergebracht und umfasst eine ortsfeste Spule 51 mit Magnetkern 52, eine bewegliche Ankerspule 53 mit Prallplatte 54 und einen Drosselkanal 55, dessen Drosselwirkung durch die Entfernung der Prallplatte 54 von der Mündung des Drosselkanals abhängt. Der Drosselstrom wird von einer Pilotdruckkammer 56 gespeist, die wiederum über einen weiteren Drosselkanal 57 mit Druckluft gespeist wird. Das Hauptventil 6 ist in einem Gehäuse 60 untergebracht, das eine Zuflusskammer 61, eine Abflusskammer 62 und eine Ventilkammer 63 aufweist. Eine Membrananordnung 64 trennt die Ventilkammer 63 von der Pilotdruckkammer 56, die über den gesteuerten Drosselkanal 55 mit einem Auslass 58 verbunden ist. Die Membrananordnung 64 wird unter Bildung eines Zwischenraums 65 von zwei Membranen 64a und 64b gebildet, die über einen Abstandshalter 66 miteinander verbunden sind, der gleichzeitig einen Ventilsitz bei 66a bildet. Ein stößelartiges Ventilelement 67 weist an einem Ende einen kalottenförmigen Teller 68 und nahe des anderen Endes einen kegelförmigen Drosselkolben 69 auf und wird mittels einer Feder 70 mit der Kalotte 68 in den Sitz 66a gedrückt und so mit der Membrananordnung 64 gekoppelt, um deren Bewegung mitzumachen. Der Drosselkolben 69 arbeitet mit einem Ventilsitz 71 zusammen, um eine Drossel 72 zu bilden, deren Weite die Größe des Gashauptstroms bestimmt, wenn ein bestimmtes Druckgefälle zwischen den Kammern 61 und 62 angenommen wird.

Die Wirkungsweise der Gasstromregeleinrichtung ist wie folgt:
Es sei angenommen, dass das Ventilelement 67 durch eine geeignete Maßnahme offen gehalten wird und dass Gas über die Zuflusskammer 61 der Abflusskammer 62 zugeführt wird. Es strömt dann ein Pilotgasstrom über den Drosselkanal 57, die Pilotdruckkammer 56, den Drosselkanal 55 und den Auslass 58 in die freie Atmosphäre, wobei sich ein Zwischendruckpotential in der Pilotdruckkammer 56 einstellt, das durch Veränderung der Drossel 55 auf eine gewünschte Größe eingeregelt werden kann, indem die Prallplatte 54 mehr oder weniger nahe an den Auslass des Drosselkanals 55 mittels der Ankerspule 53 gezogen wird. Durch den der Ankerspule 53 zugeführten elektrischen Strom lässt sich somit letztlich (über die Verstärkerwirkung Pilotdruckkammer 56/Membran 64) die Weite der Drossel 72 einregeln, damit ein gewünschter Gasvolumenstrom bei gewünschtem Druck der Gasfeder 1 zugeführt wird.

Der der Zuflusskammer 61 zugeführte Druckluftstrom ist mit niederfrequenten Druckschwankungen bis zu 10 Pascal durchsetzt. Bei ansteigendem Druck in der Zuflusskammer 61 wirkt einen zusätzliche Kraft auf den Drosselkolben 69 in Schließrichtung des Hauptventils, so dass die Wirkung der Drossel 72 zunimmt. Damit wird die Wirkung des erhöhten Druckgefälles zwischen den Kammern 61 und 62 auf den durchfließenden Gashauptstrom durch zunehmende Drosselung ausgeglichen, d. h. der Gasvolumenstrom bleibt im wesentlichen konstant. Dies gilt auch bei abnehmendem Druck in der Zuflusskammer 61. Zwar nimmt das Druckgefälle an der Drossel 72 ab, jedoch führt der verminderte Druck an dem Drosselkolben 59 dazu, dass die Membrananordndung 64 die Drossel 72 weiter macht, so dass entsprechend mehr Gas fließen kann und das verminderte Druckgefälle ausgeglichen wird.

Es werden auch Druckschwankungen in der Abflusskammer 62 nivelliert. Ansteigender Druck in der Abflusskammer führt zu einem verringerten Druckgefälle an der Drossel 62, so dass entsprechend weniger Gas nachgeliefert wird, was den Druck entsprechend verringert. Wenn in der Abflusskammer 62 der Druck abnimmt, entsteht ein größeres Druckgefälle an der Drossel 72, und es strömt mehr Gas durch die Drossel, so dass der Druck in der Abflusskammer erneut auf seinen Sollwert gebracht wird.

Die Zufuhrleitung 4, die an die Abflusskammer 62 angeschlossen ist, kann als Arbeitsleitung angesehen werden. Das vorgesteuerte Ventil 5, 6 ist so gebaut, dass es diese Arbeitsleitung mit einem Rücklauf, nämlich über die Kammer 65, verbinden kann. Hierzu wird der Pilotsteuerdruck in der Kammer 56 so weit erniedrigt, dass die Membrananordndung 64 gegenüber der Kammer 63 so weit zurück weicht, dass der Sitz 66a von dem Ventilteller 68 abhebt und die Ventilkammer 63 über die Kammer 65 mit dem Rücklauf verbunden ist. Das Ventil kann auch im Sinne eines Druckbegrenzungsventils wirksam werden, d. h. bei einem Überdruck in der Ventilkammer 63 weicht die Membran 64a so weit zurück, dass der Sitz 66a vom Ventilteller 68 frei kommt und ein Weg zum Rücklauf frei gegeben wird.

## Patentansprüche

1. Druckgaszufuhrsystem für Gasfedern, insbesondere eines Schwingungsisolationssystems, umfassend:
eine Gasfeder (1) mit einer Gasdruckkammer (10), die von einem Gasvolumenstrom durchströmt wird;
eine Gasquelle (2) zur Abgabe eines Gashauptstroms;
eine Gasstromregeleinrichtung (3) zur Regelung des Gasvolumenstroms an die Gasfeder (1) ; und
eine Zufuhrleitung (4), über die das Druckgas von der Gasquelle (2) über die Regeleinrichtung (3) zur Gasfeder (1) fließt,
**dadurch gekennzeichnet,**
**dass** die Gasstromregeleinrichtung (3) ein Regelventil (5, 6) umfasst, das ein Ventilelement (67) im Gashauptstrom aufweist, welches mit einem Hauptventilsitz (71) eine Drossel (72) bildet, die eine Zuflusskammer (61) mit einer Abflusskammer (62) verbindet, wobei das Ventilelement (67) einen Drosselkolben (69) aufweist, der in der Zuflusskammer (61) angeordnet ist und bei Druckgefälle an der Drossel (72) das Ventilelement (67) in Schließrichtung entsprechend dem Druckgefälle mehr oder weniger zu verschieben sucht, so dass an der Drossel (72) eine Feinregulierung des Gashauptstromes stattfindet, die bei ansteigendem Druck infolge Druckschwankungen in der Zuflusskammer (61) die Drosselwirkung verstärkt und bei abfallendem Druck vermindert, um den Gashauptstrom weitgehend konstant zu halten, und bei ansteigendem Druck in der Abflusskammer (62) der Gashauptstrom infolge verringerten Druckgefälles an der Drossel (72) entsprechend abnimmt sowie bei abfallendem Druck in der Abflusskammer (62) infolge vergrößerten Druckgefälles der Gashauptstrom entsprechend zunimmt.

2. Druckgaszufuhrsystem nach Anspruch 1,
**dadurch gekennzeichnet, dass** das Regelventil ein Vorsteuerventil (5) zur Steuerung der Stellung einer Membrananordnung (64) aufweist, die die Ventilkammer (63) gegenüber einer Pilotdruckkammer (56) trennt, und dass das Ventilelement (67) an die Membrananordnung (64) angekoppelt ist, um deren Bewegungen zu folgen.

3. Druckgaszufuhrsystem nach Anspruch 2,
**dadurch gekennzeichnet, dass** das Ventilelement (67) stößelartig, mit dem Drosselkolben (69) an einem Ende und einem kalottenförmigen Teller (68) am anderen Ende ausgebildet ist, und
dass der kalottenförmige Teller (68) durch eine Feder (70) gegen einen in der Membrananordnung (64) angebrachten Hilfsventilsitz (66a) gedrückt wird.

4. Druckgaszufuhrsystem nach Anspruch 2 oder 3,
**dadurch gekennzeichnet, dass** zwischen Vorsteuerventil (5) und Hauptventil (6) die Pilotdruckkammer (56) angeordnet ist, die auf die Stellung der Membrananordnung (64) einwirkt und über einen Drosselstrom gespeist wird, der von der Abflusskammer (62) ausgeht, die Pilotdruckkammer (56) durchströmt und über einen gesteuerten Drosselkanal (54, 55) abströmt.

5. Druckgaszufuhrsystem nach Anspruch 3 oder 4,
**dadurch gekennzeichnet, dass** die Membrananordnung (64) als Doppelmembran (64a, 64b) ausgebildet ist, zwischen der sich eine Entlastungskammer (64) erstreckt, die mit einer Rücklaufleitung oder einem Druckauslass verbunden ist.

6. Verfahren zur Feinregulierung eines pulsationsbehafteten Gasvolumenstromes an eine Gasfeder (1), insbesondere eines Schwingungsisolationssystems, umfassend:
Zuführen eines Gashauptstromes an eine Drossel (72), der ein leicht bewegliches Ventilelement (67) mit einem Drosselkolben (69) vorgelagert ist, und Hindurchführen des Gashauptstromes durch die Drossel (72) zur Gasfeder (1) hin;
selbsttätiges Verengen der Drossel (72), wenn eine positive Druckpulsation auf den Drosselkolben (69) trifft;
selbsttätiges Erweitern der Drossel (72), wenn eine negative Druckpulsation auf den Drosselkolben (69) trifft.

## Claims

1. Supply system for pressurised gas for gas springs, in particular of an oscillation isolation system, comprising:
a gas spring (1) having a gas pressure chamber (10) through which a gas volume stream flows;
a gas source (2) for outputting a main gas stream;
a gas stream regulating device (3) for regulating the gas volume stream to the gas spring (1); and
a supply line (4) via which the pressurised gas flows from the gas source (2) via the regulating device (3) to the gas spring (1),
**characterised in that**,
the gas stream regulating device (3) includes a regulating valve (5, 6) which has a valve element (67) in the main gas stream, which forms a throttle (72) with a main valve seat (71), which throttle connects an inflow chamber (61) to an outflow chamber (62), wherein the valve element (67) has a choke piston (69) which is disposed in the inflow chamber (61) and, in the event of a pressure gradient at the throttle (72), attempts to displace the valve element (67) in the closing direction to a greater or lesser degree according to the pressure gradient so that fine regulation of the main gas stream takes place at the throttle (72) and this regulation increases the throttle effect in the event of increasing pressure as a result of pressure fluctuations in the inflow chamber (61) and decreases the throttle effect in the event of falling pressure in order to keep the main gas stream largely constant, and in the event of increasing pressure in the outflow chamber (62) the main gas stream decreases accordingly as a result of the reduced pressure gradient at the throttle (72), and in the event of falling pressure in the outflow chamber (62) as a result of an increased pressure gradient, the main gas stream increases accordingly.

2. Supply system for pressurised gas as claimed in claim 1,
**characterised in that** the regulating valve has a pilot valve (5) for controlling the position of a membrane arrangement (64) which separates the valve chamber (63) from a pilot pressure chamber (56), and
that the valve element (67) is coupled to the membrane arrangement (64) in order to follow its movements.

3. Supply system for pressurised gas as claimed in claim 2,
**characterised in that** the valve element (67) is formed in a plunger-like manner with the choke piston (69) at one end and a cap-like plate (68) at the other end, and
that the cap-like plate (68) is pressed by a spring (70) against an auxiliary valve seat (66a) mounted in the membrane arrangement (64).

4. Supply system for pressurised gas as claimed in claim 2 or 3,
**characterised in that** between the pilot valve (5) and main valve (6) the pilot pressure chamber (56) is disposed, influences the position of the membrane arrangement (64) and is fed via a throttle stream which issues from the outflow chamber (62), flows through the pilot pressure chamber (56) and flows away via a controlled throttle duct (54, 55).

5. Supply system for pressurised gas as claimed in claim 3 or 4,
**characterised in that** the membrane arrangement (64) is formed as a double membrane (64a, 64b) between which a relief chamber (64) extends, which is connected to a return line or a pressure outlet.

6. Method for fine regulation of a pulsed gas volume stream to a gas spring (1), in particular an oscillation isolation system, comprising:
supplying a main gas stream to a throttle (72), upstream of which an easily moveable valve element (67) with a choke piston (69) is disposed, and passing the main gas stream through the throttle (72) towards the gas spring (1);
automatic narrowing of the throttle (72) when a positive pressure pulse impacts the choke piston (69);
automatic widening of the throttle (72) when a negative pressure pulse impacts the choke piston (69).

## Revendications

1. Système d'alimentation en gaz comprimé pour ressorts pneumatiques, en particulier d'un système d'isolation des vibrations, comprenant :
un ressort pneumatique (1) avec une chambre de gaz sous pression (10) où circule un flux volumique gazeux ;
une source de gaz (2) pour le refoulement d'un flux gazeux principal ;
un dispositif de régulation de flux gazeux (3) pour la régulation du flux volumique gazeux vers le ressort pneumatique (1) ; et
une conduite d'amenée (4), par laquelle le gaz comprimé s'écoule de la source de gaz (2) vers le ressort pneumatique (1) en passant par le dispositif de régulation (3),
**caractérisé en ce que**
le dispositif de régulation de flux gazeux (3) comprend une vanne de réglage (5, 6) comportant un élément de vanne (67) dans le flux gazeux principal, lequel forme avec un siège de vanne principal (71) un étranglement (72) reliant une chambre d'admission (61) à une chambre d'évacuation (62), l'élément de vanne (67) comportant un piston d'étranglement (69) disposé dans la chambre d'admission (61) et qui en cas de chute de pression sur l'étranglement (72) tend à déplacer plus ou mois l'élément de vanne (67) dans la direction de fermeture en fonction de la chute de pression, si bien qu'une régulation précise du flux gazeux principal est obtenue sur l'étranglement (72), laquelle renforce l'effet d'étranglement lorsque la pression monte du fait de variations de pression dans la chambre d'admission (61) et réduit celui-ci lorsque la pression baisse pour maintenir le flux gazeux principal pratiquement constant, et que, lorsque la pression monte dans la chambre d'évacuation (62), le flux gazeux principal diminue en conséquence du fait d'une chute de pression moindre sur l'étranglement (72), et, lorsque la pression baisse dans la chambre d'évacuation (62), le flux gazeux principal augmente du fait d'une chute de pression accrue.

2. Système d'alimentation en gaz comprimé selon la revendication 1,
**caractérisé en ce que** la vanne de réglage comporte une vanne pilote (5) pour la commande de position d'un dispositif à membrane (64) qui isole la chambre de vanne (63) d'une chambre de pression pilote (56), et
**en ce que** l'élément de vanne (67) est accouplé au dispositif à membrane (64) pour suivre les déplacements de celui-ci.

3. Système d'alimentation en gaz comprimé selon la revendication 2,
**caractérisé en ce que** l'élément de vanne (67) est réalisé en forme de poussoir, avec le piston d'étranglement (69) à une extrémité et un disque (68) en forme de calotte à l'autre extrémité, et
**en ce que** le disque (68) en forme de calotte est serré par un ressort (70) contre un siège de soupape auxiliaire (66a) monté dans le dispositif à membrane (64).

4. Système d'alimentation en gaz comprimé selon la revendication 2 ou 3,
**caractérisé en ce que** la chambre de pression pilote (56) est disposée entre la vanne pilote (5) et la vanne principale (6), agit sur la position du dispositif à membrane (64) et est alimentée par un flux d'étranglement qui sort de la chambre d'évacuation (62), traverse la chambre de pression pilote (56) et s'échappe par un canal d'étranglement (54, 55) commandé.

5. Système d'alimentation en gaz comprimé selon la revendication 3 ou 4,
**caractérisé en ce que** le dispositif à membrane (64) est réalisé comme membrane double (64a, 64b) qui s'étend entre une chambre de détente (64) reliée à une conduite de retour ou à une sortie de refoulement de pression.

6. Procédé de régulation de précision d'un flux volumique gazeux à pulsations sur un ressort pneumatique (1), en particulier d'un système d'isolation des vibrations, comprenant :
l'amenée d'un flux gazeux principal vers un étranglement (72) monté en amont d'un élément de vanne (67) facilement déplaçable avec un piston d'étranglement (69), et la traversée de l'étranglement (72) par le flux gazeux principal vers le ressort pneumatique (1) ;
le resserrement automatique de l'étranglement (72) quand une pulsation de pression positive est incidente sur le piston d'étranglement (69) ;
le desserrement automatique de l'étranglement (72), quand une pulsation de pression négative est incidente sur le piston d'étranglement (69).
